# EUROPÄISCHE PATENTSCHRIFT

(11) **EP 1 553 810 B1**
(45) Veröffentlichungstag und Bekanntmachung des Hinweises auf die Patenterteilung: **24.01.2007**
(21) Anmeldenummer: 04029901.8
(22) Anmeldetag: 16.12.2004
(51) Int. Cl.: H05B 41/28, H02M 1/00

(54) **Schaltungsanordnung zum Betrieb von Lichtquellen mit Leistungsfaktorkorrektur**
Circuit arrangement for operating light sources with power factor correction
Dispositif d'alimentation de sources lumineuses avec correction du facteur de puissance

(30) Priorität: 09.01.2004 DE 102004001618
(43) Veröffentlichungstag der Anmeldung: 13.07.2005
(73) Patentinhaber: Patent-Treuhand-Gesellschaft für elektrische Glühlampen mbH, 81543 München (DE)
(72) Erfinder: Heckmann, Markus, 81539 München (DE); Schmitt, Harald, 80689 München (DE)

(56) Entgegenhaltungen:
- WO-A-02/47441
- US-B1- 6 316 883
- DALLA COSTA M A ET AL: "An analysis about valley fill filters applied to electronic ballasts" IECON-2003. PROCEEDINGS OF THE 29TH. ANNUAL CONFERENCE OF THE IEEE INDUSTRIAL ELECTRONICS SOCIETY. ROANOKE, VA, NOV. 2 - 6, 2003, ANNUAL CONFERENCE OF THE IEEE INDUSTRIAL ELECTRONICS SOCIETY, NEW YORK, NY : IEEE, US, Bd. VOL. 3 OF 3. CONF. 29, 2. November 2003 (2003-11-02), Seiten 509-514, XP010693564 ISBN: 0-7803-7906-3

## Beschreibung

### Technisches Gebiet

Die Erfindung betrifft Schaltungsanordnungen zum Betrieb von Lichtquellen. Insbesondere betrifft die Erfindung Schaltungsanordnungen für die Leistungsversorgung von Lichtquellen aus einem Versorgungsnetz, die geeignet sind, um einen netzseitigen Leistungsfaktor zu korrigieren. Im folgenden wird für den Ausdruck Leitungsfaktorkorrektur die Abkürzung PFC verwendet, die sich an den englischsprachigen Ausdruck "Power Factor Correction" anlehnt.

Eine speisende Netzspannung weist eine Netzfrequenz auf. Der Ausdruck "hochfrequent" wird im folgenden für Frequenzen verwendet, die wesentlich höher sind als die Netzfrequenz.

### Stand der Technik

Aus der Schrift WO 02/47441 (Hu) ist eine o. g. Schaltungsanordnung bekannt. In dieser Schrift sind zwei PFC Technologien offenbart: Eine Ladungspumpe (in der Schrift WO 02/47441 (Hu) "single feedback" genannt) und eine sog. Valley-Fill-Schaltung (in der Schrift WO 02/47441 (Hu) "double pump" genannt). Dabei ist die Ladungspumpe der Valley-Fill-Schaltung von der Netzspannung aus gesehen vorgeschaltet. Zudem sind Ladungspumpe und Valley-Fill-Schaltung von der gleichen hochfrequenten Spannungsquelle gespeist.

Ladungspumpen sind z. B. aus der Schrift US 4,949,013 (Zuchtriegel) bekannt. Wesentliches Merkmal einer Ladungspumpe ist die Verschaltung eines Gleichrichterausgangs mit einer Pumpdiode. An die entstehende Verbindungsstelle ist eine hochfrequente Spannung angelegt, die einem Lastkreis entnommen wird. Es soll an dieser Stelle betont werden, dass nur ein Gleichrichterausgang mit einer Pumpdiode verschaltet ist, weshalb dieser Teil der Schaltungsanordnung in WO 02/47441 (Hu) "single feedback" genannt wird.

Valley-Fill-Schaltungen sind z. B. aus der Schrift WO 90/09087 (Skalak) bekannt. Dabei handelt es sich um eine passive PFC-Schaltung aus zwei Speicherkondensatoren und drei Dioden, die zwischen zwei Gleichrichterausgänge geschaltet wird. Die Wirkungsweise der Valley-Fill-Schaltung liegt darin begründet, dass die Speicherkondensatoren über die Dioden so verschaltet sind, dass sie von einer Netzspannung als Serienschaltung geladen werden, jedoch von einer Last als Parallelschaltung entladen werden.

Eine Valley-Fill-Schaltung kann durch Aufspaltung einer ihrer Dioden in zwei Dioden eingeschränkt auch als Ladungspumpe wirken. Dazu ist an die Verbindungsstelle der zwei durch Aufspaltung entstandenen Dioden eine hochfrequente Wechselspannung anzulegen. In der Schrift US 6,316,883 (Cho) ist eine derartig modifizierte Valley-Fill-Schaltung beschrieben. Das dort beschriebene Betriebsgerät für Entladungslampen weist zusätzlich auch eine separate Ladungspumpe auf. Diese Ladungspumpe ist der Valley-Fill-Schaltung von der Netzspannungsseite gesehen nachgeschaltet, wodurch ein weiterer Speicherkondensator nötig ist.

In WO 02/47441 (Hu) ist die Ladungspumpe der Valley-Fill-Schaltung vorgeschaltet. Ein weiter Speicherkondensator ist damit nicht nötig. Die hochfrequente Wechselspannung, die in die Ladungspumpe eingespeist wird, ist aus der hochfrequenten Wechselspannung die der modifizierten Valley-Fill-Schaltung zugeführt wird abgeleitet.

Der Schrift WO 02/47441 (Hu) ist zu entnehmen, dass mit der dort beschrieben Schaltungsanordnung gute Werte für den Leistungsfaktor erreicht werden. Normen wie IEC 61000-3-2 schreiben jedoch zusätzlich Grenzwerte für Netzstrom-Oberschwingungen vor. Dabei wird unterschieden zwischen Lichtquellen, die bis zu 25 W Leistung der Netzspannung entnehmen und Lichtquellen, die mehr als 25W entnehmen. Über 25W sind die Anforderungen wesentlich höher; d.h. die Amplituden der Netzstrom-Oberschwingungen müssen wesentlich geringer sein.

Ein Gegenstand der Schrift WO 02/47441 (Hu) ist eine Kompakt-Leuchtstofflampe mit integriertem Betriebsgerät. Derartige Lampen sind bis zu einer vom Netz aufgenommenen Leistung von 25W marktüblich. Da bis 25W die Anforderungen von einschlägigen Normen an die Netzstrom-Oberschwingen gering sind, kann die in WO 02/47441 (Hu) offenbarte Schaltungsanordnung bis 25W einen mit den Normen konformen Betrieb von Leuchtstofflampen bewerkstelligen.

Die Anforderungen an eine Schaltungsanordnung zum Betrieb von Lichtquellen sind vielfältig. Folgende Anforderungen sind bei der Auslegung dieser Schaltungsanordnungen zu berücksichtigen:
- Niedriger netzseitiger Leitungsfaktor
- Niedriger Klirrfaktor (Total Harmonic Distortion: THD) des vom Netz aufgenommenen Stroms
- Normgerechte Netzstromoberschwingungen
- Hoher Wirkungsgrad
- Niedriger Crest-Faktor des Stroms durch die Lichtquelle
- Geringe Funkstörungen
- Geringe Kosten
- Geringe geometrische Abmessungen

Zum Betrieb von Leuchtstofflampen mit einer vom Netz aufgenommenen Leistung bis 25W stellt die in WO 02/47441 (Hu) offenbarte Schaltungsanordnung einen guten Kompromiss dar, um den o. g. Anforderungen gerecht zu werden. Über 25W stellt jedoch das Einhalten der einschlägigen Normen bezüglich der Netzstrom-Oberschwingungen ein Problem dar. Speziell für Leuchtstofflampen ist der Crest-Faktor des Lampenstroms durch Normen (z. B. IEC 60929) auf einen Maximalwert von 1,7 begrenzt. Das Einhalten dieses Grenzwerts bei vom Netz aufgenommener Leistung über 25W stellt ein zusätzliches Problem dar.
Eine Dimensionierung der in WO 02/47441 (Hu) offenbarten Schaltungsanordnung dahingehend, dass auch bei einer vom Netz aufgenommenen Leistung über 25W die Normen bezüglich der Netzstrom-Oberschwingungen eingehalten werden führt zu einer erheblich stärkeren Belastung von Bauelementen der Schaltungsanordnung. Dies führt zu einer Steigerung der Kosten, zu größeren geometrischen Abmessungen und zu einem reduzierten Wirkungsgrad.
Soll zusätzlich der Grenzwert für den Crest-Faktor des Lampenstroms nach IEC 60929 eingehalten werden, so werden die Bauteile noch stärker belastet.

### Darstellung der Erfindung

Es ist Aufgabe der vorliegenden Erfindung, eine Schaltungsanordnung zum Betrieb von Lichtquellen aufbauend auf die Topologie einer Schaltungsanordnung gemäß WO 02/47441 (Hu) derart weiterzubilden, dass auch bei einer vom Netz aufgenommenen Leistung über 25 W die Netzstromoberschwingungen normgerechte Werte aufweisen. Für den Betrieb von Leuchtstofflampen ist es zusätzlich Aufgabe der vorliegenden Erfindung einen normgerechten Lampenstrom-Crest-Faktor zu ermöglichen.

Diese Aufgabe wird durch eine Schaltungsanordnung zum Betrieb von Lichtquellen gelöst, die zusätzlich zu den Merkmalen die aus WO 02/47441 (Hu) bekannt sind, einen zweiten Resonanzkondensator aufweist, der keine Pumpwirkung entfaltet.

Ein erster Resonanzkondensator mit Pumpwirkung und ein zweiter Resonanzkondensator ohne Pumpwirkung eröffnen einen Freiheitsgrad, mit dem die Eigenschaften der Schaltungsanordnung besser optimiert werden können. Durch den erfindungsgemäßen zweiten Resonanzkondensator ist es möglich einerseits die einschlägigen Vorschriften einzuhalten und gleichzeitig die Bauteilebelastung zu minimieren. Weiterhin ist es durch die Erfindung möglich die Werte für die Kapazität der beiden Resonanzkondensatoren so zu wählen, dass sie in ein handelsübliches Raster fallen.

Damit können für die Resonanzkondensatoren kostengünstige Bauteile eingesetzt werden.

Die Valley-Fill-Schaltung ist eine PFC-Schaltung die keine erhebliche Mehrbelastung von Bauteilen hervorruft. Die Mehrbelastung betrifft Bauteile wie z. B. Drosseln und elektronische Schalter und wird durch Strom- oder Spannungsüberhöhungen bedingt, die im Zusammenhang mit Blindleistungstransport entstehen. Allerdings können mit einer Valley-Fill-Schaltung alleine keine normgerechten Netzstrom-Oberschwingungen erzielt werden. Auch ein normgerechter Lampenstrom-Crest-Faktor ist nicht gegeben.

Mit einer Ladungspumpe ist es möglich normgerechte Netzstromoberschwingungen und einen normgerechten Lampenstrom-Crest-Faktor zu erzielen. Allerdings gehen mit einer Ladungspumpe Mehrbelastungen von Bauteilen einher. Üblich sind Ladungspumpen, die am positiven Gleichrichterausgang angeschlossen sind.

Die Kombination einer Valley-Fill-Schaltung mit einer Ladungspumpe reduziert die Netzstromoberschwingungen und den Lampenstrom-Crest-Faktor bei nur geringen Mehrbelastungen von Bauteilen. Bei einer vom Netz aufgenommen Leistung über 25W müssen wegen der in diesem Leistungsbereich gültigen Normen die Netzstromoberschwingungen weiter reduziert werden.

Die Erfindung wird deshalb vorteilhaft derart weitergebildet, dass die Ladungspumpe doppelt ausgeführt ist. D. h. sowohl mit dem positiven als auch mit dem negativen Gleichrichterausgang ist eine Ladungspumpe verbunden. Damit werden auch bei einer vom Netz aufgenommenen Leistung über 25 W normgerechte Netzstrom-Oberschwingungen und ein normgerechter Lampenstrom-Crest-Faktor bei nur geringen Mehrbelastungen von Bauteilen erreicht.

Eine besonders vorteilhafte Ausgestaltung der Erfindung ist dadurch gekennzeichnet, dass ein Inverter als Halbbrückeninverter ausgeführt ist. Der Inverter ist zwischen eine positive und eine negative Schiene geschaltet und wird dadurch mit einer Gleichspannung versorgt. An einem Inverterausgang stellt der Inverter eine hochfrequente Wechselspannung zum Betrieb von Lichtquellen zur Verfügung. Durch die Ausführung des Inverters als Halbbrückeninverter kann ein besonders hoher Wirkungsgrad der Schaltungsanordnung erzielt werden.

Eine weitere besonders vorteilhafte Ausgestaltung der Erfindung ist dadurch gekennzeichnet, dass ein Anschluss der Lichtquelle über einen Koppelkondensator mit der positiven oder negativen Schiene verbunden ist. Damit wird eine weitere Reduzierung der Netzstromoberschwingungen und des Lampenstrom-Crest-Faktors erreicht.

### Kurze Beschreibung der Zeichnungen

Im folgenden soll die Erfindung anhand von Ausführungsbeispielen unter Bezugnahme auf Zeichnungen näher erläutert werden.
Figur 1 zeigt ein Ausführungsbeispiel der Erfindung für eine Leuchtstofflampe mit Elektrodenwendeln.
Figur 2 zeigt ein weiteres Ausführungsbeispiel der Erfindung für eine Leuchtstofflampe mit Elektrodenwendeln.
Figur 3 zeigt ein weiteres Ausführungsbeispiel der Erfindung für eine Leuchtstofflampe mit Elektrodenwendeln.
Figur 4 zeigt eine Schaltungsanordnung mit nur einem Resonanzkondensator.

Im folgenden werden Transistoren durch den Buchstaben T, Dioden durch den Buchstaben D, Kondensatoren durch den Buchstaben C, Drosseln durch den Buchstabe L, Widerstände durch den Buchstaben R und Anschlüsse durch den Buchstaben J jeweils gefolgt von einer Zahl bezeichnet. Auch werden im folgenden für gleiche und gleichwirkende Elemente der verschiedenen Ausführungsbeispiele durchweg gleiche Bezugszeichen verwendet.

### Bevorzugte Ausführung der Erfindung

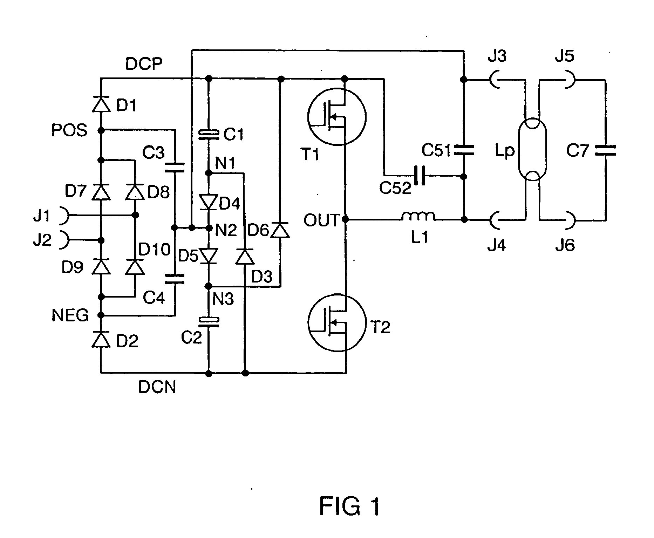

In Figur 1 ist ein Ausführungsbeispiel der Erfindung für eine Leuchtstofflampe mit Elektrodenwendeln dargestellt. Die Anschlüsse J1 und J2 bilden den Netzspannungseingang. An J1 und J2 ist eine Netzspannung anschließbar. J1 und J2 sind mit dem Eingang eines Gleichrichters verbunden. Dem Gleichrichter können auch noch Mittel zur Funkentstörung vorgeschaltet sein.

Im allgemeinen besteht der Gleichrichter aus einer bekannten Brückenschaltung der Gleichrichterdioden D7, D8, D9 und D10, die an ihrem positiven Gleichrichterausgang POS und an ihren negativen Gleichrichterausgang NEG die gleichgerichtete Netzspannung zur Verfügung stellt. Bedingt durch die Ladungspumpe müssen die Gleichrichterdioden hochfrequent schalten können. Es ist auch möglich langsame Gleichrichterdioden zu verwenden. Dann muss allerdings jeweils eine schnelle Diode zwischen die Brückenschaltung und den jeweiligen Gleichrichterausgang geschaltet werden.

Eine erste Diode D1, bei der es sich um eine Pumpdiode handelt, ist mit ihrer Anode mit dem positiven Gleichrichterausgang POS und mit ihrer Kathode mit einer positiven Schiene DCP verbunden.

Eine optionale zweite Diode D2, bei der es sich ebenfalls um eine Pumpdiode handelt, ist mit ihrer Kathode mit dem negativen Gleichrichterausgang NEG und mit ihrer Anode mit einer negativen Schiene DCN verbunden. Diese zweite Diode D2 kann entfallen, falls kein zweiter, später beschriebener Pumpkondensator C4 vorgesehen ist. Der zweite Pumpkondensator C4 bringt eine weitere Verbesserung bezüglich der Netzstrom-Oberschwingungen und des Lampenstrom-Crest-Faktors ohne größere Belastung der Bauteile.

Zwischen die positive DCP und die negative Schiene DCN ist die Serienschaltung einer dritten D3, einer vierten D4, einer fünften D5 und einer sechsten Diode D6 geschaltet, wobei jeweils die Kathode dieser Dioden zur positiven Schiene DCP hin gerichtet ist und die Verbindungsstellen dieser Dioden folgende Knoten ausbilden: Zwischen der dritten D3 und der vierten Diode D4 einen ersten Knoten N1, zwischen der vierten D4 und der fünften Diode D5 einen zweiten Knoten N2 und zwischen der fünften D5 und der sechsten Diode D6 einen dritten Knoten N3.

Ein erster Speicherkondensator C1 ist zwischen die positive Schiene DCP und den ersten Knoten N1 geschaltet. Ein zweiter Speicherkondensator C2 ist zwischen die negative Schiene DCN und den dritten Knoten N3 geschaltet. Die Dioden D3, D4, D5 und D6 sowie die Speicherkondensatoren C1 und C2 bilden die Valley-Fill-Schaltung. Es handelt sich um eine modifizierte Valley-Fill-Schaltung wie sie im Zusammenhang mit der o. g. Schrift US 6,316,883 (Cho) erwähnt wurde. Die Dioden D4 und D5 bilden das o.g. aufgespaltete Diodenpaar. An den zwischen den Dioden D4 und D5 gelegenen Knoten N2 ist eine hochfrequente Spannung angelegt, die aus einem Lastkreis ausgekoppelt ist. Damit wird auch in der Valley-Fill-Schaltung in begrenztem Maße die Wirkung einer Ladungspumpe erzielt. In Serie zu den Dioden kann auch ein Widerstand geschaltet sein. Damit werden die Netzstromoberschwingungen weiter reduziert.

Die Serienschaltung zweier elektronischer Schalter T1 und T2 ist zwischen die positive und die negative Schiene DCP und DCN angeschlossen. T1 und T2 bilden einen Halbbrückeninverter, der am Verbindungspunkt von T1 und T2 einen Inverterausgang OUT aufweist. Über die positive und die negative Schiene DCP und DCN bezieht der Halbbrückeninverter Energie. Durch abwechselndes Ein- und Ausschalten von T1 und T2 liegt am Inverterausgang OUT eine hochfrequente Wechselspannung gegenüber der negativen Schiene DCN an. Diese Ausgangsspannung des Inverters weist eine Inverterschwingfrequenz auf, die wesentlich höher ist als Netzfrequenz. Die negative Schiene DCN dient in diesem Fall als Bezugspotenzial zur Definition der Ausgangsspannung des Inverters. Ohne Beschränkung der Allgemeinheit, kann auch die positive Schiene DCP als bezugspotenzial dienen.

T1 und T2 sind im Ausführungsbeispiel als MOSFET ausgeführt. Es können jedoch auch andere elektronische Schalter verwendet werden. An den Gateanschlüssen von T1 und T2 liegt eine Steuerspannung an, die das abwechselnde Ein- und Ausschalten von T1 und T2 bewirkt. Diese Steuerspannung wird von einer Steuerschaltung bereitgestellt, die in der Figur 1 nicht dargestellt ist. Die Steuerschaltung kann entweder einen frei schwingenden Oszillator enthalten, oder vom Lastkreis gesteuert sein, wodurch ein, aus dem Stand der Technik bekannter, selbstschwingender Halbbrückenwechselrichter gebildet wird.

Am Inverterausgang OUT ist ein Reaktanznetzwerk angeschlossen, dessen Hauptaufgabe es ist, eine Quellimpedanz des Inverterausgangs OUT an eine Lastimpedanz der Lichtquelle anzupassen. Im Ausführungsbeispiel umfasst das Reaktanznetzwerk eine Lampendrossel L1 und einen ersten und einen zweiten Resonanzkondensator C51 und C52. Die Lampendrossel L1 weist einen ersten und einen zweiten Anschluss auf, wobei der erste Anschluss mit dem Inverterausgang OUT verbunden ist.

Erfindungsgemäß ist der zweite Anschluss der Lampendrossel L1 mit je einem ersten Anschluss des ersten und zweiten Resonanzkondensators C51, C52 verbunden, wobei ein zweiter Anschluss des ersten Resonanzkondensators C51 mit dem zweiten Knoten N2 und ein zweiter Anschluss des zweiten Resonanzkondensators C52 mit der positiven Schiene DCP verbunden ist. Gleichwirkend kann der zweite Anschluss des zweiten Resonanzkondensators C52 anstatt mit der positive auch mit der negativen Schiene DCN verbunden sein.

Für den Start und den Betrieb der Leuchtstofflampe ist bekanntermaßen die Serienresonanz von Lampendrossel L1 und Resonanzkondensatoren C51, C52 von Bedeutung. Für diese Serienresonanz ist die Summe der Werte der Kapazitäten C51 und C52 maßgebend. Bei konstantem Wert für die Summe können in der erfindungsgemäßen Schaltungsanordnung die einzelnen Werte für Kapazitäten C51 und C52 variiert werden. Mit dem Wert für C51 kann eingestellt werden, wie stark die Wirkung der Ladungspumpe ist, während der Wert von C52 keinen direkten Einfluss auf die Ladungspumpe hat.

Der beiden Anschlüsse des ersten Resonanzkondensator C51 sind mit Ausgangsklemmen (J3, J4) verbunden, an die eine Lichtquelle (Lp) anschließbar ist. In der Figur 1 ist beispielhaft für eine Lichtquelle eine Leuchtstofflampe dargestellt. Die Schaltungsanordnung kann grundsätzlich aber auch zum Betrieb anderer Lichtquellen wie z. B. Hochdruckentladungslampen, Leuchtdioden oder Glühlampen. Zum Betrieb von Leuchtdioden oder Glühlampen ist ggf. ein Transformator vorzusehen, der die Ausgangsspannung des Inverters an das von den Lichtquellen benötigte Spannungsniveau anpasst. Die in der Figur 1 dargestellte Leuchtstofflampe besitzt zwei Elektrodenwendeln. Jeweils ein Anschluss der Elektrodenwendeln ist mit den Ausgangsklemmen J3 und J4 verbunden. Der jeweils andere Anschluss der Elektrodenwendeln ist über weitere Anschlussklemmen J5 und J6 mit einem Heiz-Kondensator C7 verbunden. C51 und C7 sind somit über die Elektrodenwendeln verbunden. Damit fließt vor einer Zündung der Lampe Lp ein Vorheizstrom durch die Elektrodenwendeln, was die Lebensdauer der Lampe Lp erhöht. Der Wert von C7 muss bei der Bestimmung des Werts für C51 berücksichtigt werden.

Der Heizkondensator C7 ist für die prinzipielle Funktion der Erfindung nicht nötig. Er kann auch entfallen. Dann ergibt sich ein sogenannter Kaltstart der Lampe. Eine Vorheizung der Wendeln kann auch durch andere aus dem Stand der Technik bekannte Mittel wie z. B. Transformatoren bewerkstelligt werden.

Die hochfrequente Wechselspannung, die dem Knoten 2 anliegt, liegt auch an einem Pumpkondensator C3 an, der mit dem positiven Gleichrichterausgang POS verbunden ist. Durch die Verbindung des Knotens N2 über den Pumpkondensator C3 mit dem positiven Gleichrichterausgang POS ist eine erste Ladungspumpe realisiert.

Vorteilhaft ist der Pumpkondensator C4 zwischen den Knoten N2 und den negativen Gleichrichterausgang NEG geschaltet. Damit ist eine zweite Ladungspumpe am negativen Gleichrichterausgang NEG realisiert. Bevorzugt weisen die beiden Pumpkondensatoren den gleichen Wert auf. Durch die vorteilhafte zweite Ladungspumpe ist es möglich, die Amplitude der Netzstrom-Oberschwingungen und den Wert des Lampenstrom-Crest-Faktors zu senken, ohne zwischenzeitliche Speicherung großer Blindleistungsbeträge in den Pumpkondensatoren C3 und C4. Damit bleibt die Belastung der Lampendrossel L 1 und der elektronischen Schalter T 1 und T2 gering.

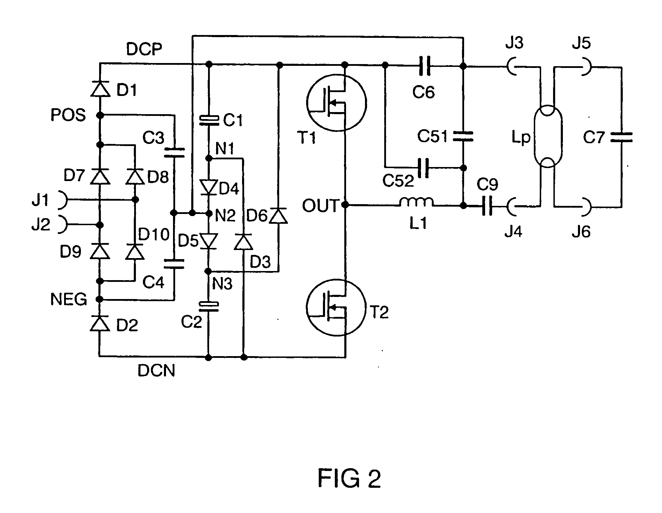

In Figur 2 ist ein weiteres Ausführungsbeispiel der Erfindung dargestellt. Es hat sich als vorteilhaft erwiesen, wenn die Lampe Lp über einen Koppelkondensator C6 mit der positiven oder negativen Schiene DCP oder DCN verbunden ist. Damit kann die Amplitude der Netzstromoberschwingungen und der Lampenstrom-Crest-Faktor gesenkt werden. Das Ausführungsbeispiel in Figur 2 ist gegenüber Figur 1 derart weitergebildet, dass C6 zwischen den zweiten Anschluss von C51 und der positiven Schiene DCP geschaltet ist. Damit ist C6 auch zwischen den Lampenanschluss J3 und die positive Schiene DCP geschaltet.

Eine weiterer Unterschied zwischen Figur 1 und Figur 2 besteht in der Ankopplung der Lampe Lp. Im Ausführungsbeispiel in Figur 2 ist der zweite Anschluss der Lampendrossel L1 über einen DC-Kondensator C9 mit der Anschlussklemme J4 verbunden. Damit ist C9 in Serie zur Lampe Lp geschaltet, wodurch ein Gleichstrom durch die Lampe Lp ausgeschlossen wird. Dies kann vorteilhaft für die Lebensdauer der lampe sein. Auch können dann Schaltungen zum Einsatz kommen, die einen Wendelbruch mittels eines Teststroms durch die Wendeln detektieren.

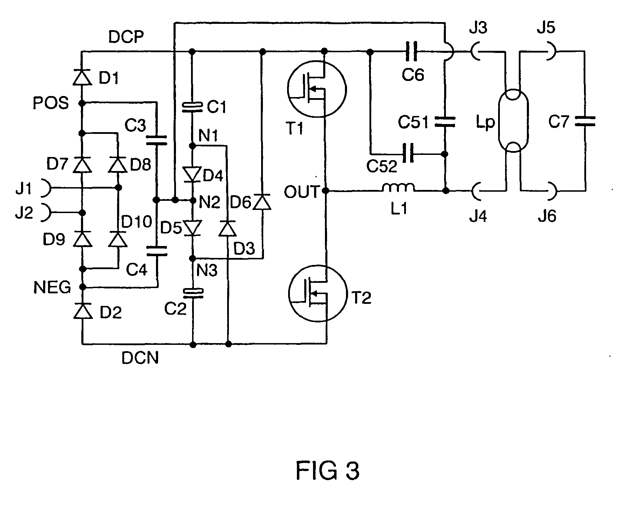

In Figur 3 ein weiteres Ausführungsbeispiel der Erfindung für eine Leuchtstofflampe mit Elektrodenwendeln dargestellt.

Der Unterschied zum Ausführungsbeispiel in Figur 2 besteht zunächst darin dass wie in Figur 1 der DC-Kondensator wieder entfällt und durch eine Brücke ersetzt ist. Ei zweiter wesentlicher Unterschied besteht darin, dass der zweite Anschluss des ersten Resonanzkondensators C51 nicht mehr mit dem Lampenanschluss J3 und dem Koppelkondensator C6 verbunden ist. Somit wird in den zweiten Knoten N2 nicht mehr die hochfrequente Wechselspannung von J3, sondern über C51 die hochfrequente Wechselspannung von J4 eingespeist. Vorteilhaft ist bei dieser Ausführung der Erfindung, dass die positive Schiene DCP einen geringeren Anteil von hochfrequenter Wechselspannung aufweist. Dies führt zu einer weiter reduzierten Bauteilbelastung. Zudem kann sich ein reduzierter Anteil von hochfrequenter Wechselspannung auf der positiven Schiene DCP vorteilhaft auf Funkstörungen der Schaltungsanordnung auswirken.

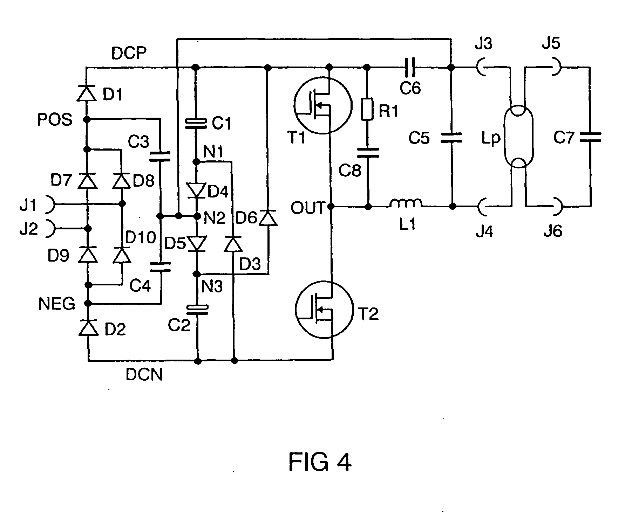

In Figur 4 ist eine Weiterbildung des Standes der Technik dargestellt. Die Schaltungsanordnung in Figur 4 enthält nicht den erfindungsgemäßen zweiten Resonanzkondensator C52. Sie enthält aber die gegenüber dem Stand der Technik vorteilhafte zweite Ladungspumpe mittels C4 und D2. Zudem ist parallel zum elektronischen Schalter T1 ein sog. Snubber geschaltet, der in Figur 4 aus der Serienschaltung eines Widerstands R1 und eines Kondensators C8 besteht. Derartige Snubber sind zur Schaltentlastung der elektronischen Schalter aus dem Stand der Technik bekannt und können mit der vorliegenden Erfindung kombiniert werden.

In allen Figuren ist nur eine Lampe Lp abgebildet. Es ist jedoch auch möglich mehrere Lampen in Serien- oder Parallelschaltung zu betreiben. Insbesondere bei der Serienschaltung wirkt sich die Erfindung vorteilhaft aus. Dies kann damit erklärt werden, dass bei einer Serienschaltung von Lampen die resultierende Lampenspannung im Vergleich zu nur einer Lampe hoch ist, was ohne erfindungsgemäße Maßnahmen zu hohen Bauteilbelastungen führt.

Die hochfrequente Wechselspannung, die dem Knoten N2 zugeführt wird, ist in den Ausführungsbeispielen dem Potenzial am Anschluss J3 oder J4 entnommen. Dies entspricht den Potenzialen an den Anschlüssen des Resonanzkondensators C51. Der Knoten N2 kann jedoch auch mit anderen Potenzialen verbunden werden, die eine hochfrequente Wechselspannung aufweisen. Z. B. eignet sich dafür der Inverterausgang OUT. Die in den Ausführungsbeispielen gewählten Varianten weisen die geringste Amplitude für die Netzstromoberschwingungen und den geringsten Lampenstrom-Crest-Faktor auf.

## Patentansprüche

1. Schaltungsanordnung zum Betrieb von Lichtquellen mit folgenden Merkmalen:
• Ein Gleichrichter (D7, D8, D9, D10) mit einem Netzspannungseingang (J1, J2), der bei Anlegen einer Netzwechselspannung mit einer Netzfrequenz an seinen Netzspannungseingang an einem positiven (POS) und einem negativen Gleichrichterausgang (NEG) eine gleichgerichtete Netzwechselspannung bereitstellt,
• eine erste Diode (D1), die mit ihrer Anode mit dem positiven Gleichrichterausgang (POS) und mit ihrer Kathode mit einer positiven Schiene (DCP) verbunden ist,
• eine negative Schiene (DCN) die mit dem negativen Gleichrichterausgang (NEG) verbunden ist,
• eine dritte (D3), eine vierte (D4), eine fünfte (D5) und eine sechste Diode (D6), die in Serie zwischen die positive (DCP) und die negative Schiene (DCN) geschaltet sind, wobei jeweils die Kathode dieser Dioden (D3, D4, D5, D6) zur positiven Schiene (DCP) hin gerichtet ist und die Verbindungsstellen dieser Dioden (D3, D4, D5, D6) folgende Knoten ausbilden: Zwischen der dritten (D3) und der vierten Diode (D4) einen ersten Knoten (N1), zwischen der vierten (D4) und der fünften Diode (D5) einen zweiten Knoten (N2) und zwischen der fünften (D5) und der sechsten Diode (D6) einen dritten Knoten (N3),
• einen ersten (C1) und einen zweiten Speicherkondensator (C2), wobei der erste Speicherkondensator (C1) zwischen die positive Schiene (DCP) und den ersten Knoten (N1) und der zweite Speicherkondensator (C2) zwischen die negative Schiene (DCN) und den dritten Knoten (N3) geschaltet ist,
• ein Inverter (T1, T2), der zur Energieversorgung an die positive (DCP) und die negative Schiene (DCN) angeschlossen ist und an einem Inverterausgang (OUT) gegenüber der negativen Schiene (DCN) eine Inverterausgangsspannung bereitstellt, die eine Inverterschwingfrequenz aufweist, die wesentlich höher ist als Netzfrequenz,
• ein Reaktanznetzwerk, das an den Inverterausgang (OUT) angeschlossen ist, und Ausgangsklemmen (J3, J4) zum Anschluss von Lichtquellen bereitstellt, wobei das Reaktanznetzwerk eine Lampendrossel (L1) umfasst, die einen ersten und einen zweiten Anschluss aufweist und der erste Anschluss mit dem Inverterausgang (OUT) verbunden ist,
• eine Kopplung zwischen dem Reaktanznetzwerk und dem Knoten (N2), der am Knoten (N2) gegenüber der negativen Schiene (DCN) einen Spannungsverlauf bewirkt, der die Inverterschwingfrequenz aufweist,
• einen ersten Pumpkondensator (C3), der mit dem Knoten (N2) und dem positiven Gleichrichterausgang (POS) verbunden ist,
**dadurch gekennzeichnet, dass**
der zweite Anschluss der Lampendrossel (L1) mit je einem ersten Anschluss eines ersten und eines zweiten Resonanzkondensators (C51, C52) verbunden ist, wobei ein zweiter Anschluss des ersten Resonanzkondensators (C51) mit dem zweiten Knoten (N2) und ein zweiter Anschluss des zweiten Resonanzkondensators (C52) mit der positiven (DCP) oder negativen (DCN) Schiene verbunden ist.

2. Schaltungsanordnung zum Betrieb von Lichtquellen gemäß Anspruch 1,
**dadurch gekennzeichnet, dass**
zwischen die negative Schiene (DCN) und den negativen Gleichrichterausgang (NEG) eine zweite Diode (D2) geschaltet ist, deren Kathode zum negativen Gleichrichterausgang (NEG) hin gerichtet ist und
die Schaltungsanordnung einen zweiten Pumpkondensator (C4) aufweist, wobei der zweite Pumpkondensator (C4) mit dem Knoten (N2) und dem negativen Gleichrichterausgang (NEG) verbunden ist.

3. Schaltungsanordnung zum Betrieb von Lichtquellen gemäß Anspruch 1,
**dadurch gekennzeichnet, dass**
der zweite Anschluss der Lampendrossel (L1) mit einer Anschlussklemme zum Anschluss von Lichtquellen (J4) verbunden ist und der zweite Anschluss des ersten Resonanzkondensators (C51) mit einem weiteren Anschluss von Lichtquellen (J3) verbunden ist.

4. Schaltungsanordnung zum Betrieb von Lichtquellen gemäß Anspruch 1,
**dadurch gekennzeichnet, dass**
der zweite Anschluss der Lampendrossel (L1) mit einer Anschlussklemme zum Anschluss von Lichtquellen (J4) verbunden ist und eine weitere Anschlussklemme zum Anschluss von Lichtquellen (J3) über einen Koppelkondensator (C6) mit der positiven (DCP) oder der negativen (DCN) Schiene verbunden ist.

5. Schaltungsanordnung zum Betrieb von Lichtquellen gemäß Anspruch 3,
**dadurch gekennzeichnet, dass**
die weitere Anschlussklemme zum Anschluss von Lichtquellen (J3) über einen Koppelkondensator (C6) mit der positiven (DCP) oder der negativen (DCN) Schiene verbunden ist.

6. Schaltungsanordnung zum Betrieb von Lichtquellen gemäß Anspruch 1,
**dadurch gekennzeichnet, dass**
der zweite Anschluss der Lampendrossel (L1) über einen DC-Kondensator (C9) mit einer Anschlussklemme zum Anschluss von Lichtquellen (J4) verbunden ist.

7. Schaltungsanordnung zum Betrieb von Lichtquellen gemäß Anspruch 1,
**dadurch gekennzeichnet, dass**
die Lichtquelle (Lp) eine Gasentladungslampe ist.

8. Schaltungsanordnung zum Betrieb von Lichtquellen gemäß Anspruch 1,
**dadurch gekennzeichnet, dass**
die Lichtquelle (Lp) eine Gasentladungslampe ist mit heizbaren Wendeln ist, wobei beim Anschluss der Gasentladungslampe jeweils ein Anschluss einer Wendel mit einer Ausgangsklemme des Reaktanznetzwerks (J3, J4) verbunden ist und die jeweils anderen Anschlüsse der Wendeln über einen Heiz-Kondensator (C7) verbunden sind.

9. Schaltungsanordnung zum Betrieb von Lichtquellen gemäß Anspruch 1,
**dadurch gekennzeichnet, dass**
der Inverter ein Halbbrückeninverter ist, der eine Serienschaltung von zwei elektronischen Schaltern (T1, T2) umfasst, die zwischen die positive (DCP) und die negative Schiene (DCN) geschaltet sind und der Inverterausgang (OUT) der Verbindungspunkt der beiden elektronischen Schalter (T1, T2) ist.

## Claims

1. Circuit arrangement for operating light sources having the following features:
• a rectifier (D7, D8, D9, D10) having a system voltage input (J1, J2) which, when a system AC voltage at a system frequency is applied at its system voltage input, provides a rectified system AC voltage at a positive (POS) and a negative rectifier output (NEG),
• a first diode (D1) which is connected at its anode to the positive rectifier output (POS) and at its cathode to a positive busbar (DCP),
• a negative busbar (DCN) which is connected to the negative rectifier output (NEG),
• a third (D3), a fourth (D4), a fifth (D5) and a sixth diode (D6) which are connected in series between the positive (DCP) and the negative busbar (DCN), in each case the cathode of these diodes (D3, D4, D5, D6) being directed towards the positive busbar (DCP), and the connection points of these diodes (D3, D4, D5, D6) forming the following nodes: a first node (N1) between the third (D3) and the fourth diode (D4), a second node (N2) between the fourth (D4) and the fifth diode (D5), and a third node (N3) between the fifth (D5) and the sixth diode (D6),
• a first (C1) and a second storage capacitor (C2), the first storage capacitor (C1) being connected between the positive busbar (DCP) and the first node (N1), and the second storage capacitor (C2) being connected between the negative busbar (DCN) and the third node (N3),
• an inverter (T1, T2), which is connected to the positive (DCP) and the negative busbars (DCN) for the purpose of supplying power and provides an inverter output voltage at an inverter output (OUT) opposite the negative busbar (DCN), said voltage having an inverter oscillating frequency which is substantially higher than the system frequency,
• a reactance network which is connected to the inverter output (OUT) and provides output terminals (J3, J4) for connecting light sources, the reactance network comprising a lamp inductor (L1) which has a first and a second connection, and the first connection being connected to the inverter output (OUT),
• a coupling between the reactance network and the node (N2) which brings about a voltage waveform at the node (N2) opposite the negative busbar (DCN) which has the inverter oscillating frequency,
• a first pump capacitor (C3) which is connected to the node (N2) and to the positive rectifier output (POS),
**characterized in that**
the second connection of the lamp inductor (L1) is connected in each case to a first connection of a first and a second resonant capacitor (C51, C52), a second connection of the first resonant capacitor (C51) being connected to the second node (N2), and a second connection of the second resonant capacitor (C52) being connected to the positive (DCP) or negative (DCN) busbar.

2. Circuit arrangement for operating light sources according to Claim 1,
**characterized in that**
a second diode (D2) is connected between the negative busbar (DCN) and the negative rectifier output (NEG), the cathode of said diode being directed towards the negative rectifier output (NEG), and
the circuit arrangement has a second pump capacitor (C4), the second pump capacitor (C4) being connected to the node (N2) and to the negative rectifier output (NEG).

3. Circuit arrangement for operating light sources according to Claim 1,
**characterized in that**
the second connection of the lamp inductor (L1) is connected to a connection terminal for connecting light sources (J4), and the second connection of the first resonant capacitor (C51) is connected to a further connection of light sources (J3).

4. Circuit arrangement for operating light sources according to Claim 1,
**characterized in that**
the second connection of the lamp inductor (L1) is connected to a connection terminal for connecting light sources (J4), and a further connection terminal for connecting light sources (J3) is connected to the positive (DCP) or the negative (DCN) busbar via a coupling capacitor (C6).

5. Circuit arrangement for operating light sources according to Claim 3,
**characterized in that**
the further connection terminal for connecting light sources (J3) is connected to the positive (DCP) or the negative (DCN) busbar via a coupling capacitor (C6).

6. Circuit arrangement for operating light sources according to Claim 1,
**characterized in that**
the second connection of the lamp inductor (L1) is connected to a connection terminal for connecting light sources (J4) via a DC capacitor (C9).

7. Circuit arrangement for operating light sources according to Claim 1,
**characterized in that**
the light source (Lp) is a gas discharge lamp.

8. Circuit arrangement for operating light sources according to Claim 1,
**characterized in that**
the light source (Lp) is a gas discharge lamp having heatable filaments, in each case one connection of a filament being connected to an output terminal of the reactance network (J3, J4), and the respective other connections of the filaments being connected via a heating capacitor (C7) when the gas discharge lamp is connected.

9. Circuit arrangement for operating light sources according to Claim 1,
**characterized in that**
the inverter is a half-bridge inverter which comprises a series circuit comprising two electronic switches (T1, T2) which are connected between the positive (DCP) and the negative busbars (DCN), and the inverter output (OUT) is the connection point of the two electronic switches (T1, T2).

## Revendications

1. Montage pour faire fonctionner des sources lumineuses ayant des caractéristiques suivantes :
• un redresseur (D7, D8, D9, D10) ayant une entrée (J1, J2) de tension de réseau qui, par application d'une tension alternative de réseau ayant une fréquence de réseau à son entrée de tension de réseau, donne une tension alternative de réseau redressée à une sortie positive (POS) et à une sortie négative (NEG) du redresseur,
• une première diode (D1) qui est reliée, par son anode, à la sortie positive (POS) du redresseur et, par sa cathode, à une barre (DCP) positive,
• une barre (DCN) négative qui est reliée à la sortie négative (NEG) du redresseur,
• une troisième (D3), une quatrième (D4), une cinquième (D5) et une sixième diode (D6) qui sont montées en série entre la barre (DCP) positive et la barre (DCN) négative, les cathodes respectives de ces diodes (D3, D4, D5, D6) étant dirigées vers la barre (DCP) positive et les points de liaison de ces diodes (D3, D4, D5, D6) formant les noeuds suivants : entre la troisième diode (D3) et la quatrième diode (D4), un premier noeud (N1), entre la quatrième diode (D4) et la cinquième diode (D5), un deuxième noeud (N2) et entre la cinquième diode (D5) et la sixième diode (D6), un troisième noeud (N3),
• un premier condensateur (C1) d'accumulation et un deuxième condensateur (C2) d'accumulation, le premier condensateur (C1) d'accumulation étant monté entre la barre (DCP) positive et le premier noeud (N1), et le deuxième condensateur (C2) d'accumulation entre la barre (DCN) négative et le troisième noeud (N3),
• un onduleur (T1, T2) qui, pour l'alimentation en énergie, est relié à la barre (DCP) positive et à la barre (DCN) négative et qui donne à une sortie (OUT) d'onduleur, par rapport à la barre (DCN) négative, une tension de sortie d'onduleur qui a une fréquence d'oscillation d'onduleur qui est sensiblement plus grande qu'une fréquence de réseau,
• un réseau de réactance qui est raccordé à la sortie (OUT) de l'onduleur et des bornes (J3, J4) de sortie pour la connexion de sources lumineuses, le réseau de réactance comprenant une bobine (L1) de lampe qui a une première et une deuxième borne, et la première borne est reliée à la sortie (OUT) de l'onduleur,
• un couplage entre le réseau de réactance et le noeud (N2) qui provoque, par rapport à la barre (DCN) négative, une courbe de tension qui a la fréquence d'oscillation de l'onduleur,
• un premier condensateur (C3) de pompage qui est relié au noeud (N2) et à la sortie positive (POS) du redresseur,
**caractérisé en ce que**
la deuxième borne de la bobine (L1) de lampe est reliée à respectivement une première borne d'un premier et d'un deuxième condensateur (C51, C52) de résonance, une deuxième borne du premier condensateur (C51) de résonance étant reliée au deuxième noeud (N2) et une deuxième borne du deuxième condensateur (C52) de résonance à la barre (DCP) positive ou à la barre (DCN) négative.

2. Montage pour faire fonctionner des sources lumineuses suivant la revendication 1,
**caractérisé en ce que**
il est monté, entre la barre (DCN) négative et la sortie négative (NEG) du redresseur, une deuxième diode (D2) dont la cathode est dirigée vers la sortie négative (NEG) du redresseur et
le montage a un deuxième condensateur (C4) de pompage, le deuxième condensateur (C4) de pompage étant relié au noeud (N2) et à la sortie négative (NEG) du redresseur.

3. Montage pour faire fonctionner des sources lumineuses suivant la revendication 1,
**caractérisé en ce que**
la deuxième borne de la bobine (L1) de lampe est reliée à une borne pour le raccordement de sources (J4) lumineuses et la deuxième borne du premier condensateur (C51) de résonance est reliée à une autre borne de source (J3) lumineuse.

4. Montage pour faire fonctionner des sources lumineuses suivant la revendication 1,
**caractérisé en ce que**
la deuxième borne de la bobine (L1) de lampe est reliée à une borne de connexion de sources (J4) lumineuses et une autre borne pour la connexion de sources (J3) lumineuses est reliée, par l'intermédiaire d'un condensateur (C6) de couplage, à la barre (DCP) positive ou à la barre (DCN) négative.

5. Montage pour faire fonctionner des sources lumineuses suivant la revendication 3,
**caractérisé en ce que**
l'autre borne de connexion de sources (J3) lumineuses est reliée, par l'intermédiaire d'un condensateur (C6) de couplage, à la barre (DCP) positive ou à la barre (DCN) négative.

6. Montage pour faire fonctionner des sources lumineuses suivant la revendication 1,
**caractérisé en ce que**
la deuxième borne de la bobine (L1) de lampe est reliée, par l'intermédiaire d'un condensateur (C9) à courant continu, à une borne pour la connexion de sources (J4) lumineuses.

7. Montage pour faire fonctionner des sources lumineuses suivant la revendication 1,
**caractérisé en ce que**
la source (Lp) lumineuse est une lampe à décharge dans un gaz.

8. Montage pour faire fonctionner des sources lumineuses suivant la revendication 1,
**caractérisé en ce que**
la source (Lp) lumineuse est une lampe à décharge dans un gaz ayant des filaments chauffants, dans lequel, lors de la connexion de la lampe à décharge dans un gaz, respectivement une borne d'un filament est reliée à une borne du réseau (J3, J4) de réactance et les autres bornes des filaments sont reliées par l'intermédiaire d'un condensateur (C7) de chauffage.

9. Montage pour faire fonctionner des sources lumineuses suivant la revendication 1,
**caractérisé en ce que**
l'onduleur est un onduleur à demi-pont qui comprend un circuit série de deux interrupteurs (T1, T2) électroniques qui sont montés entre la barre (DCP) positive et la barre (DCN) négative, et la sortie (OUT) d'onduleur est le point de liaison des deux interrupteurs (T1, T2) électroniques.
